# FASCICULE DE BREVET EUROPEEN

(11) **EP 0 808 799 B1**
(45) Date de publication et mention de la délivrance du brevet: **19.07.2000**
(21) Numéro de dépôt: 97401080.3
(22) Date de dépôt: 15.05.1997
(51) Int. Cl.: C01B 33/18

(54) **Dispositif de dopage d'une poudre de silice**
Vorrichtung zur Dotierung eines Kieselsäurepulvers
Apparatus for doping silica powder

(30) Priorité: 21.05.1996 FR 9606272
(43) Date de publication de la demande: 26.11.1997
(73) Titulaire: ALCATEL, 75008 Paris (FR)
(72) Inventeur: Campion, Jean-Florent, 92270 Bois Colombes (FR); Jouvenel, Bernard, 59800 Lille (FR); Gasca, Laurent, 91400 Orsay (FR)
(74) Mandataire: Feray, Valérie

(56) Documents cités:
- EP-A- 0 578 553
- DATABASE WPI Week 8737 Derwent Publications Ltd., London, GB; AN 87-261366 XP002023728 & JP 62 182 127 A (NIPPON TELEG & TELEPH) , 10 Août 1987

## Description

La présente invention concerne un dispositif de dopage d'une poudre de silice. De manière générale, les poudres obtenues avec un dispositif selon l'invention pourront être utilisées dans n'importe quel type d'application, et plus particulièrement pour la fabrication de préformes de fibres optiques.

On entend par dopage une opération consistant à incorporer dans les molécules de silice une ou plusieurs molécules d'éléments destinés à en modifier les propriétés. Notamment, dans le domaine des fibres optiques, on incorpore dans la silice des dopants destinés à modifier son indice de réfraction, en l'augmentant ou en le diminuant selon que la silice concernée est destinée à constituer respectivement, par exemple, le coeur ou la gaine optique d'une fibre optique. Les dopants peuvent être par exemple le germanium, pour accroître l'indice de réfraction de la silice, ou le fluor pour le diminuer.

La silice prête à être employée pour la fabrication de fibres optiques notamment se présente sous la forme d'une poudre constituée de grains de taille plus ou moins grande, densifiés ou non.

Les grains de silice, lorsqu'ils sont densifiés, sont destinés par exemple à être utilisés pour effectuer la recharge plasma d'une préforme de fibre optique fabriquée par la méthode MCVD (Modified Chemical Vapor Deposition).

Les grains de silice, lorsqu'ils ne sont pas densifiés, sont de taille généralement inférieure à celle des grains de silice densifiés, et peuvent être utilisés par exemple pour fabriquer une préforme par la méthode VAD (Vapor Axial Deposition) ou OVD (Outside Vapor Deposition).

Toutes ces méthodes, données uniquement à titre illustratif, la présente invention ne se limitant absolument pas à ces méthodes, sont bien connues de l'homme de l'art du domaine des fibres optiques, et ne seront pas décrites plus en détail ici.

Pour la fabrication des grains de silice densifiés, on part de grains de silice non densifiés, se trouvant sous la forme de très petites particules, de taille comprise entre 0,1 et 100 nm en général. La poudre de silice est dans ce cas dénommée suie. La suie de silice peut être obtenue de diverses manières bien connues de l'homme de l'art. Par exemple, elle peut être fabriquée par oxydation en présence de chaleur d'un gaz précurseur de la silice, tel que le tétrachlorure de silicium SiCl₄. Pour la fabrication des grains de silice densifiés, les petites particules de silice sont agglomérées pour former des granulés, puis ces granulés sont consolidés par un chauffage qui permet d'éliminer la porosité qui existe entre les différentes particules qui les composent, de sorte que les grains obtenus sont denses. Ces grains ont en général une taille supérieure au micron.

On appelle granulé de silice une particule de silice à un stade intermédiaire de la fabrication des grains de silice densifiés.

La méthode classique utilisée pour obtenir une poudre de grains de silice dopée consiste à effectuer l'opération de densification des granulés sous une atmosphère contenant un gaz précurseur du dopant souhaité. Ainsi, pour effectuer la fluoration des granulés de silice, on effectue la densification sous une atmosphère contenant un gaz fluorant tel que l'hexafluorure de soufre SF₆ ou le tétrafluorure de silicium SiF₄. Les granulés de silice non densifiés sont disposés dans un creuset que l'on place dans un four pour le porter à la température permettant d'effectuer la densification, le four étant alimenté en gaz précurseur du dopant souhaité. Le dopage se produit par diffusion des molécules de dopant F₂ dans les granulés de silice, ce qui conduit à la formation de molécules complexes du type SiO₂₋ₓF₂ₓ.

Les dispositifs à creuset pour la mise en oeuvre de ce type de procédés posent un certain nombre de problèmes.

Le problème majeur réside dans le fait que, pour obtenir un dopage homogène, le temps de traitement nécessaire est très long et le rendement du dopage est très médiocre, ce qui est pénalisant. Si l'on diminue le temps de traitement, ce qui augmente le rendement, le dopage est inhomogène. Or un dopage inhomogène des grains de silice conduit, par exemple pour l'application à la fabrication de fibres optiques, à des variations d'indice inacceptables pour les performances en termes de transmission de ces fibres optiques.

Un autre problème important provient du fait que le dopage est effectué de manière statique et requiert donc une première phase de montée en température du four, une deuxième phase de traitement à température sensiblement constante, puis une dernière phase de baisse en température avant de pouvoir récupérer les grains dopés et densifiés. Le procédé ne peut donc être mis en oeuvre en continu, ce qui est également pénalisant en termes de rendement.

On connaît par ailleurs par le document EP-0 578 553 un procédé de fabrication d'une poudre de silice dopée par du fluor dans lequel la poudre de silice fabriquée par une méthode sol-gel est portée à haute température dans un four en présence de SiF₄.

Un but de la présente invention est de mettre au point un dispositif de dopage de poudre de silice permettant d'effectuer un dopage homogène, compatible avec l'utilisation de la silice dans la fabrication des fibres optiques, et ce sans pénaliser le rendement de l'opération de dopage.

Un autre but de la présente invention est de mettre au point un dispositif de dopage de poudre de silice permettant d'effectuer le dopage en continu.

La présente invention propose à cet effet un dispositif de dopage d'une poudre de silice à l'aide d'un dopant, comprenant :
- des moyens de réception de ladite poudre de silice,
- des moyens de chauffage de ladite poudre contenue dans lesdits moyens de réception, pour porter cette dernière à une température suffisante pour permettre la densification des particules qu'elle contient, et
- des moyens d'alimentation desdits moyens de réception en un gaz précurseur dudit dopant, de sorte que ladite poudre densifiée est chauffée sous une atmosphère contenant ledit gaz précurseur, ce qui provoque l'incorporation dudit dopant dans ladite poudre pendant sa densification pour obtenir une poudre de silice dopée et densifiée,
**caractérisé en ce que** lesdits moyens de réception sont mobiles de sorte que, durant leur mouvement, chacune desdites particules de ladite poudre qu'elle contient est animée d'un mouvement tel que sensiblement toute sa surface extérieure est exposée à l'atmosphère contenant ledit gaz précurseur.

Grâce au dispositif selon l'invention, puisque les particules de la poudre de silice sont en mouvement pendant la densification, toutes ces particules, quelle que soit leur taille et leur position initiale dans les moyens de réception sont soumis à l'action du gaz précurseur du dopant. Il n'y a donc plus de particules difficiles et longues à atteindre. Le dopage est homogène sans que le rendement de l'opération de dopage soit pénalisé.

De manière avantageuse, les moyens de réception peuvent être animés d'un mouvement de rotation. Ceci permet aux particules de rouler sur leur surface et d'être ainsi encore mieux exposés à l'action du gaz précurseur. Ceci est facilité lorsque les moyens de réception ont une forme sensiblement tubulaire.

Selon une autre caractéristique de l'invention, les moyens de réception comportent une entrée des particules de poudre de silice non ou partiellement densifiée et une sortie des particules de silice dopées et densifiées, l'entrée étant séparée de la sortie. En combinaison avec le mouvement des particules, ceci permet d'effectuer le traitement en continu.

D'autre part, les moyens de réception peuvent être disposés de sorte que les particules sont entraînées par gravité de l'entrée vers la sortie. Ainsi, les moyens de réception peuvent être inclinés par rapport à l'horizontale. Ceci améliore encore l'exposition de toute la surface des particules à l'atmosphère contenant le gaz précurseur.

Enfin, le gaz précurseur peut être introduit dans les moyens de réception de manière à circuler à contre-courant par rapport aux particules, ce qui assure encore une meilleure homogénéité du dopage.

Lorsque le dopant est le fluor, le gaz précurseur est choisi parmi l'hexafluorure de soufre SF₆, le tétrafluorure de silicium SiF₄, les fréons.

Lorsque le dopant est le chlore, le gaz précurseur est choisi parmi l'acide chlorhydrique HCI, le chlore gazeux Cl₂ ou le SOCl₂.

Un dopage mixte chlore-fluor peut être réalisé en mélangeant les gaz précédents.

D'autres caractéristiques et avantages de la présente invention apparaîtront dans la description suivante d'un dispositif selon l'invention, donnée à titre d'exemple.

Dans les figures suivantes :
- la figure 1 montre de manière schématique un dispositif selon un premier mode de réalisation de l'invention, partiellement en coupe longitudinale,
- la figure 2 est un grossissement de la partie Il de la figure 1,
- la figure 3 est un grossissement de la partie III de la figure 1,
- la figure 4 est une coupe transversale partielle du corps principal du dispositif de la figure 1,
- la figure 5 montre de manière schématique un dispositif selon un deuxième mode de réalisation de l'invention, partiellement en coupe longitudinale.

Dans toutes ces figures, les éléments communs portent les mêmes numéros de référence.

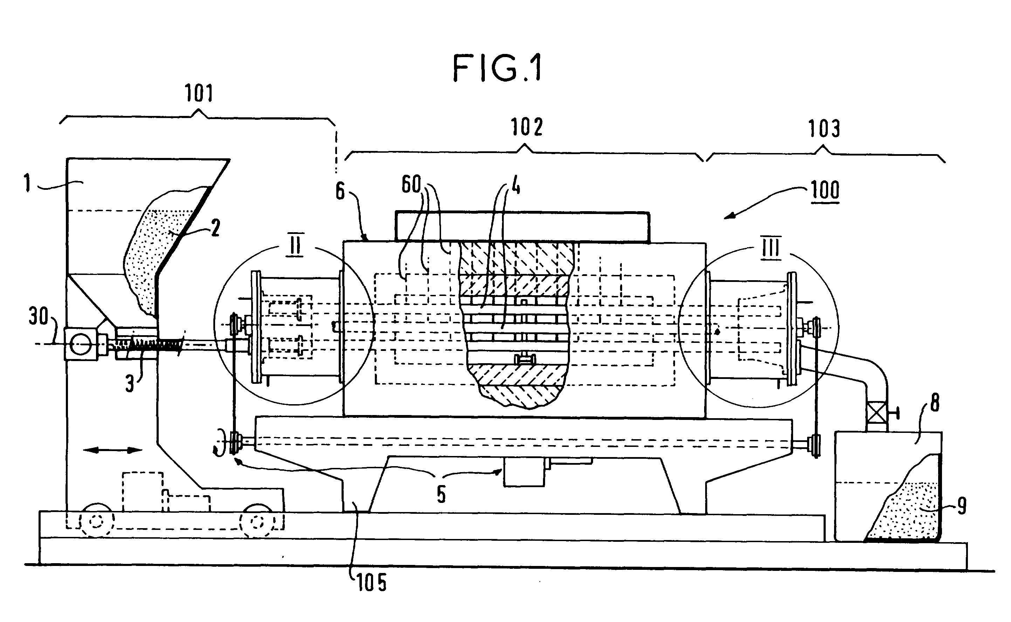

Un dispositif 100 selon un premier mode de réalisation de l'invention, représenté aux figures 1 à 4, se compose de trois parties : une partie alimentation 101 en poudre de suie de silice ou en granulés de silice préalablement élaborés, une partie récupération 103 des grains de silice dopés et densifiés, et entre les deux, un corps principal 102 servant à effectuer les opérations d'agglomération (lorsque l'on part de suie de silice), de dopage et de densification de la poudre de suie de silice. La partie alimentation 101 se trouve sur la figure 1 à la gauche du corps principal 102, et la partie récupération 103 à sa droite.

La partie alimentation 101 en poudre de suie de silice ou en granulés de silice comprend un récipient 1 contenant de la suie ou des granulés de silice 2, relié à des moyens de distribution de la suie ou des granulés de silice, comme par exemple une vis hélicoïdale 3 animée d'un mouvement de rotation autour de son axe 30 de manière à assurer une distribution uniforme de la suie ou des granulés de silice 2.

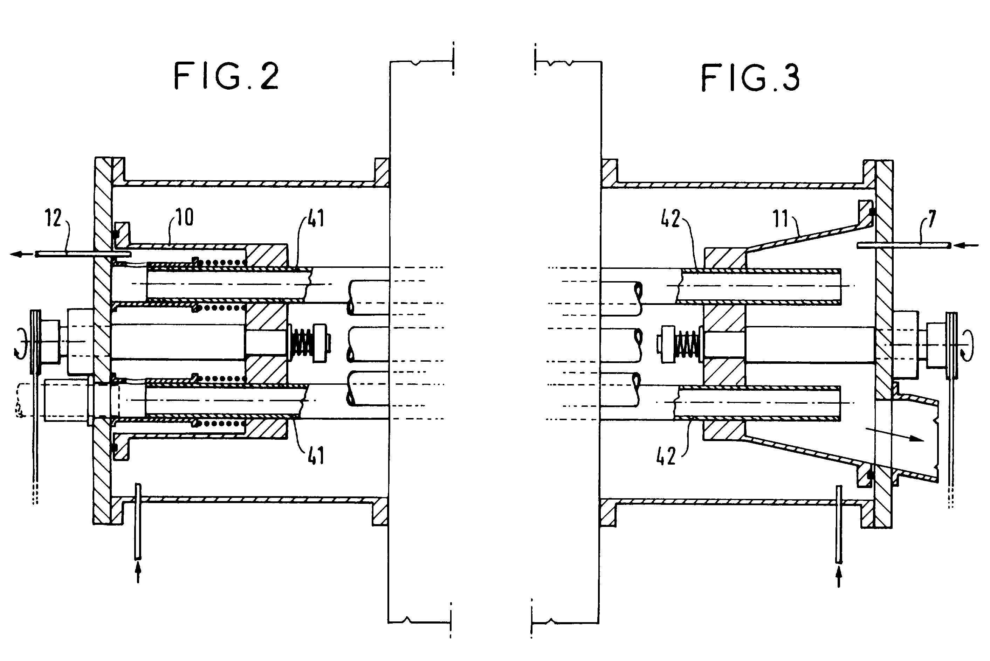

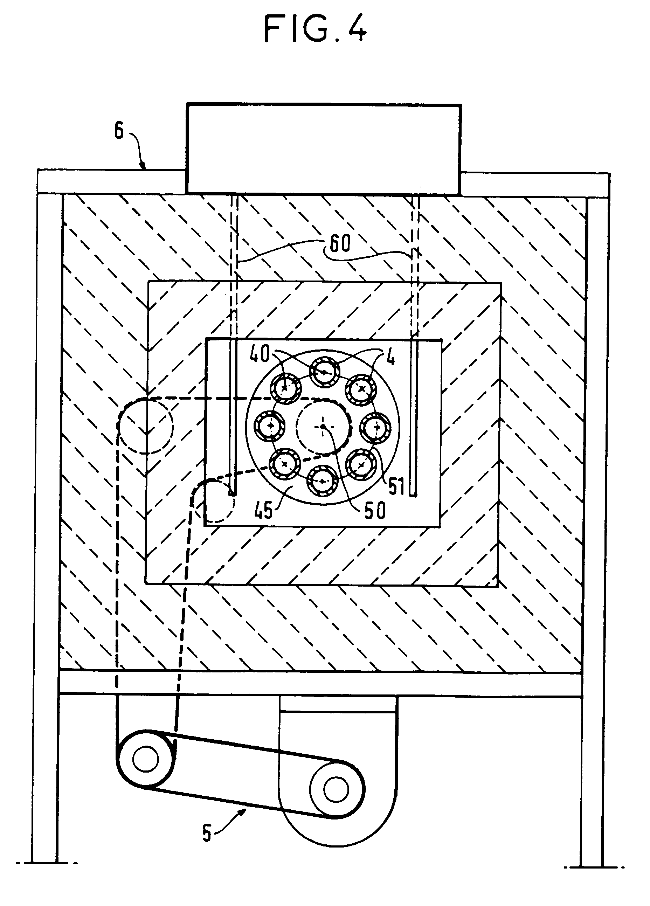

Le corps principal 102 du dispositif 100, monté sur un bâti 105, comprend un ensemble de tubes 4, en alumine par exemple, disposés parallèlement les uns aux autres de sorte que leurs axes 40 définissent un cylindre 51 (voir figure 4), et servant de moyens de réception de la suie ou des granulés de silice 2, les axes 40 des tubes 4 étant parallèles à l'axe 30. L'ensemble des tubes 4 est monté dans un support 45 de manière à être entraîné en rotation autour d'un axe commun 50 qui est celui du cylindre 51, parallèle aux axes 30 et 40, par des moyens d'entraînement en rotation 5 portés par le bâti 105. Du fait de cette rotation, l'une des extrémités 41 (voir figure 2) de chacun des tubes 4 se trouve successivement en communication avec les moyens de distribution 3. Ainsi, la suie ou les granulés de silice 2 sont introduits dans les tubes de réception 4.

On notera que les extrémités 41 des tubes 4 débouchent toutes dans une enceinte fermée 10 dans laquelle débouchent également les moyens d'alimentation 3.

Les tubes 4 sont par ailleurs entourés, sur une grande partie de leur longueur, par un four 6 porté par le bâti 105, présentant à chacune de ses extrémités le long de l'axe 50 une ouverture (non référencée) pour permettre le passage des tubes 4 et leur rotation commune, et dans lequel pénètrent des électrodes de chauffage 60 pour le chauffage des tubes de réception 4. Les extrémités 41 des tubes 4 se trouvent en-dehors du four 6 dans la partie alimentation 101 du dispositif 100, et les extrémités 42 des tubes 4 (voir figure 3), opposées aux extrémités 41, se trouvent également en-dehors du four 6 dans la partie récupération 103 du dispositif 100.

La partie récupération 103 du dispositif 100 comprend des moyens d'alimentation 7 en gaz précurseur d'un dopant avec lequel on souhaite doper la silice. Ce peut être par exemple un gaz fluorant tel que l'hexafluorure de soufre SF₆ ou le tétrafluorure de silicium SiF₄. Les moyens d'alimentation 7 débouchent dans une enceinte fermée 11 dans laquelle débouchent également les extrémités 42 des tubes 4, de sorte que ces derniers sont ainsi tous alimentés en gaz précurseur. Ainsi, le gaz précurseur du dopant est injecté et circule à contre-courant par rapport aux granulés de silice, ce qui assure une homogénéité du dopage meilleure que dans le cas où le gaz circule dans le même sens que les granulés de silice.

L'enceinte 11 est également en communication, à sa partie inférieure, avec un récipient 8 de récupération des grains de silice densifiés et dopés 9, se trouvant dans la partie récupération 103 du dispositif 100.

Les produits réactifs gazeux de la réaction de dopage s'échappent du dispositif 100 par l'extrémité 41 des tubes 4 se trouvant au niveau de la partie alimentation 101 de ce dernier, puis par des moyens d'évacuation 12 qui communiquent avec l'enceinte 10.

On va maintenant décrire le fonctionnement du dispositif 100 selon l'invention pour le dopage de suie de silice 2.

La suie de silice 2, non densifiée, est introduite dans le dispositif 100 par l'extrémité 41 des tubes de réception 4 dans lesquels elle est chauffée par le four 6. Simultanément, le gaz précurseur du dopant souhaité (le fluor dans l'exemple présent) est introduit dans le dispositif par les moyens d'alimentation 7 puis par l'extrémité 42 des tubes de réception 4.

Le chauffage est effectué à haute température, typiquement voisine de 1350°C lorsque l'on souhaite effectuer un dopage par du fluor. De ce fait, les particules très fines constituant la suie de silice 2 s'agglomèrent pour former des granulés de silice poreux dans lesquels s'incorpore le dopant provenant du gaz précurseur et de manière simultanée, les granulés ainsi dopés se consolident pour former des grains de silice dopés et densifiés 9 qui sont récupérés dans le récipient 8.

Grâce à la rotation de l'ensemble des tubes 4 autour de l'axe 50 durant la mise en oeuvre du procédé, les granulés de silice sont mis en mouvement contre la surface intérieure des tubes 4 de sorte que toute leur surface est exposée à l'action du gaz dopant.

Ainsi, grâce au dispositif selon l'invention, tous les grains de silice sont dopés de manière homogène, ce qui n'est pas le cas avec les dispositifs de l'art antérieur. De plus, tous les granulés de silice sont exposés quasiment simultanément à l'action du gaz dopant, de sorte que le rendement du procédé est amélioré par rapport aux procédés utilisant les dispositifs statiques de l'art antérieur.

Comme les tubes de réception sont en rotation, les granulés roulent sur leur surface intérieure, ce qui facilite le traitement. Toutefois, selon l'invention, on peut choisir n'importe quelle géométrie pour la surface des moyens de réception, et n'importe quel type de mouvement d'entraînement, du moment que l'ensemble de la surface de chaque granulé est exposée à l'action du gaz dopant.

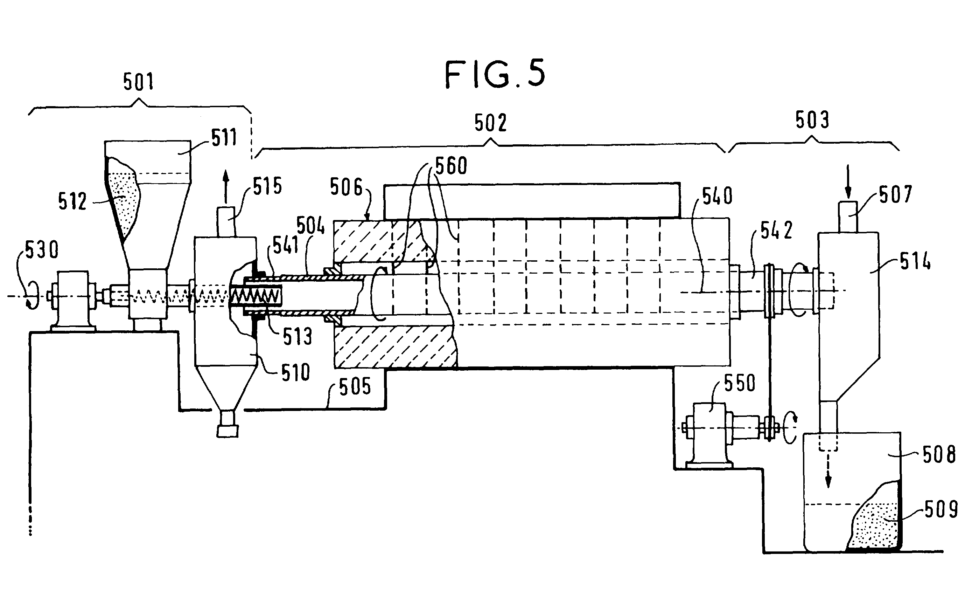

On va maintenant décrire, en relation avec la figure 5, un dispositif 500 selon un deuxième mode de réalisation de la présente invention.

Le dispositif 500 se compose également de trois parties : une partie alimentation 501 en poudre de suie de silice, une partie récupération 503 des grains de silice dopés et densifiés, et entre les deux, un corps principal 502 servant à effectuer les opérations d'agglomération, de dopage et de densification de la poudre de suie de silice. La partie alimentation 501 se trouve sur la figure 5 à la gauche du corps principal 502, et la partie récupération 503 à sa droite.

La partie alimentation 501 en poudre de suie de silice comprend un récipient 511 contenant de la suie de silice 512, relié à des moyens de distribution de la suie de silice, comme par exemple une vis hélicoïdale 513 animée d'un mouvement de rotation autour de son axe 530 de manière à assurer une distribution uniforme de la suie de silice 512.

Le corps principal 502 du dispositif 500, monté sur un bâti 505, comprend un tube 504, en alumine par exemple, servant de moyen de réception de la suie de silice 512, l'axe 540 du tube 504 étant confondu avec l'axe 530. Le tube 504 est entraîné en rotation autour de son axe 540 par des moyens d'entraînement en rotation 550 portés par le bâti 505. L'une des extrémités 541 du tube 504 est en communication avec les moyens de distribution 513. Ainsi, la suie de silice 2 est introduite dans le tube de réception 504.

On notera que l'extrémité 541 du tube 504 débouche dans une enceinte fermée 510 dans laquelle débouchent également les moyens d'alimentation 513.

Le tube 504 est par ailleurs entouré, sur une grande partie de sa longueur, par un four 506 porté par le bâti 505, présentant à chacune de ses extrémités le long de l'axe 540 une ouverture (non référencée) pour permettre le passage du tube 504 et sa rotation, et dans lequel pénètrent des électrodes de chauffage 560 pour le chauffage du tube de réception 504. L'extrémité 541 du tube 504 se trouve en-dehors du four 506 dans la partie alimentation 501 du dispositif 100, et l'extrémité 542 du tube 504, opposée à l'extrémité 541, se trouve également en-dehors du four 506 dans la partie récupération 503 du dispositif 500.

La partie récupération 503 du dispositif 500 comprend des moyens d'alimentation 507 en gaz précurseur d'un dopant avec lequel on souhaite doper la silice. Ce peut être par exemple un gaz fluorant tel que l'hexafluorure de soufre SF₆ ou le tétrafluorure de silicium SiF₄. Les moyens d'alimentation 507 débouchent dans une enceinte fermée 514 dans laquelle débouche également l'extrémité 542 du tube 504, de sorte que ce dernier est ainsi alimenté en gaz précurseur. Ainsi, le gaz précurseur du dopant souhaité est injecté et circule à contre-courant par rapport à la suie de silice 512, ce qui assure une bonne homogénéité du dopage.

L'enceinte 514 est également en communication, à sa partie inférieure, avec un récipient 508 de récupération des grains de silice densifiés et dopés 509, se trouvant dans la partie récupération 503 du dispositif 500.

Les produits réactifs gazeux de la réaction de dopage s'échappent du dispositif 500 par l'extrémité 541 du tube 504 se trouvant au niveau de la partie alimentation 501 de ce dernier, puis par des moyens d'évacuation 515 qui communiquent avec l'enceinte 510.

Le fonctionnement du dispositif 500 selon l'invention pour le dopage de la suie de silice 512 est similaire au fonctionnement du dispositif 100 des figures 1 à 4 pour le dopage de la suie de silice 2. Les avantages du dispositif 500 sont les mêmes que ceux du dispositif 100.

Le fonctionnement des dispositifs 100 et 500 selon l'invention pour le dopage de granulés de silice 2 préalablement élaborés est identique aux fonctionnements décrits ci-dessus, excepté le fait qu'il n'y a pas d'agglomération puisque les granulés ont été élaborés au préalable.

Bien entendu, la présente invention n'est pas limitée aux modes de réalisation qui viennent d'être décrits.

En particulier, l'homogénéité des grains de silice dopés obtenus peut être encore améliorée si le dispositif 100 ou le dispositif, ou au moins leur corps principal 102 ou 502, est incliné vers le bas par rapport à l'horizontale, d'un angle de l'ordre de 3 à 5° par exemple, entre l'entrée de suie de silice et la sortie des grains dopés.

Dans les modes de réalisation décrits, l'entrée et la sortie sont séparées, mais cela n'est pas obligatoire. Cependant, la séparation de l'entrée et de la sortie permet d'effectuer un dopage en continu avec par exemple la fabrication d'une préforme de fibre optique, en reliant la sortie de grains de silice dopés et densifiés au distributeur de silice associé à un dispositif de fabrication d'une telle préforme.

Le matériau constituant le ou les tubes de réception peut être quelconque du moment qu'il résiste notamment à l'action de dérivés carbonés, du fluor et de tout autre dopant avec lequel on souhaite doper la silice, ainsi qu'à l'abrasion.

La température à laquelle sont portés la suie ou les granulés de silice introduits dans le dispositif selon l'invention doit être choisie notamment en fonction du débit de gaz précurseur. Le temps de traitement est fonction de la vitesse du mouvement des granulés dans les moyens de réception, elle-même fonction de l'inclinaison de ces moyens de réception.

## Revendications

1. Dispositif de dopage d'une poudre de silice à l'aide d'un dopant, comprenant :
- des moyens de réception (4;504) de ladite poudre de silice,
- des moyens de chauffage (6;560) de ladite poudre contenue dans lesdits moyens de réception (4;504), pour porter ces derniers à une température suffisante pour permettre la densification des particules (2;512) qu'elle contient, et
- des moyens d'alimentation (7;507) desdits moyens de réception (4;504) en un gaz précurseur dudit dopant, de sorte que ladite poudre est chauffée sous une atmosphère contenant ledit gaz précurseur, ce qui provoque l'incorporation dudit dopant dans ladite poudre pendant sa densification pour obtenir une poudre de silice dopée et densifiée (9;509),
**caractérisé en ce que** lesdits moyens de réception (4;504) sont mobiles de sorte que, durant leur mouvement, chacune desdites particules (2 ; 512) de ladite poudre qu'ils contiennent est animée d'un mouvement tel que sensiblement toute sa surface extérieure est exposée à l'atmosphère contenant ledit gaz précurseur.

2. Dispositif selon la revendication 1 caractérisé en ce que lesdits moyens de réception (4;504) sont animés d'un mouvement de rotation.

3. Dispositif selon l'une des revendications 1 ou 2 caractérisé en ce que lesdits moyens de réception (4;504) sont sensiblement tubulaires, les particules de ladite poudre de silice étant introduits à l'intérieur du ou des tubes correspondants.

4. Dispositif selon l'une des revendications 1 à 3 caractérisé en ce que lesdits moyens de réception (4;504) comportent une entrée (41;541) des particules de ladite poudre de silice non ou partiellement densifiée (2;512) et une sortie (42;542) des particules de silice dopées et consolidées (9;509), ladite entrée (41;541) étant séparée de ladite sortie (42;542).

5. Dispositif selon la revendication 4 caractérisé en ce que lesdits moyens de réception (4;504) sont inclinés de sorte que lesdites particules sont entraînées par gravité de ladite entrée (41;541) vers ladite sortie (42;542).

6. Dispositif selon l'une des revendications 4 ou 5 caractérisé en ce que lesdits moyens de réception (4;504) sont inclinés par rapport à l'horizontale.

7. Dispositif selon l'une des revendications 5 ou 6 caractérisé en ce que ledit gaz précurseur est introduit dans lesdits moyens de réception (4;504) de manière à circuler à contre-courant par rapport auxdites particules.

8. Dispositif selon l'une des revendications 1 à 7 caractérisé en ce que ladite poudre de silice est initialement constituée de particules de suie de silice.

9. Dispositif selon l'une des revendications 1 à 7 caractérisé en ce que ladite poudre de silice est initialement constituée de granulés de silice partiellement densifiés.

## Claims

1. A device for doping silica powder with a dopant, including:
- silica soot particle receiving means (4; 504),
- means for heating (6; 560) said particles contained in said receiving means (4; 504) to a temperature sufficient to allow densification of the granules (2; 512) they contain, and
- means (7; 507) for feeding said receiving means (4; 504) with a precursor gas of said dopant so that said granules are heated in an atmosphere containing said precursor gas, which causes said dopant to be incorporated into said granules during their densification to produce densified and doped silica grains (9; 509),
characterized in that said receiving means (4; 504) are mobile so that, during their movement, each of said granules (2; 512) of said particles that they contain is subject to movement such that substantially all of its outside surface is exposed to the atmosphere containing said precursor gas.

2. The device claimed in claim 1, characterized in that said receiving means (4; 504) are subjected to a rotational movement.

3. The device claimed in claim 1 or 2, characterized in that said receiving means (4; 504) are substantially tubular, said particles of said silica granules being introduced into the interior of the corresponding tube(s).

4. The device claimed in any one of claims 1 to 3, characterized in that said receiving means (4; 504) have an inlet (41; 541) for granules of said partially densified or non-densified silica particles (2; 512) and a consolidated and doped silica grain (9; 509) outlet (42; 542), said inlet (41; 541) being separate from said outlet (42; 542).

5. The device claimed in claim 4, characterized in that said receiving means (4; 504) are inclined so that said granules are entrained by gravity from said inlet (41; 541) to said outlet (42; 542).

6. The device claimed in claim 4 or claim 5, characterized in that said receiving means (4; 504) are inclined to the horizontal.

7. The device claimed in claim 5 or claim 6, characterized in that said precursor gas is introduced into said receiving means (4; 504) in a counterflow arrangement relative to said granules.

8. The device claimed in any one of claims 1 to 7, characterized in that said silica particles are initially silica soot granules.

9. The device claimed in any one of claims 1 to 7, characterized in that said silica particles are initially partially densified silica granules.

## Patentansprüche

1. Vorrichtung zur Dotierung eines Kieselsäurepulvers mithilfe eines Dotiermittels, die umfaßt:
- Mittel zur Aufnahme (4; 504) des Kieselsäurepulvers;
- Mittel zur Erhitzung (6; 560) des in den Mitteln zur Aufnahme (4; 504) enthaltenen Pulvers, um dieses auf ein Temperatur zu bringen, die ausreicht, um die Verdichtung der enthaltenen Partikel (2; 512) zu ermöglichen, und
- Mittel zur Zuführung (7; 507) einer gasförmigen Vorstufe des Dotiermittels zu den Aufnahmemitteln (4; 504), so daß das Pulver unter einer die gasförmige Vorstufe enthaltenden Atmosphäre erhitzt wird, was den Zusatz des Dotiermittels in das Pulver während dessen Verdichtung hervorruft, um ein dotiertes und verdichtetes Kieselsäurepulver (9; 509) zu gewinnen,
**dadurch gekennzeichnet, daß** die Mittel zur Aufnahme (4; 504) bewegbar sind, so daß während ihrer Bewegung alle im Pulver enthaltenen Partikel (2; 512) sich so bewegen, daß dessen im wesentlichen gesamte Außenfläche der Atmosphäre ausgesetzt ist, welche die gasförmige Vorstufe enthält.

2. Vorrichtung nach Anspruch 1,
**dadurch gekennzeichnet, daß** die Mittel zur Aufnahme (4; 504) eine Rotationsbewegung vollführen.

3. Vorrichtung nach einem der Ansprüche 1 oder 2,
**dadurch gekennzeichnet, daß** die Mittel zur Aufnahme (4; 504) im wesentlichen röhrenförmig sind und die Partikel des Kieselsäurepulvers in das Innere des oder der entsprechenden Röhren eingebracht werden.

4. Vorrichtung nach einem der Ansprüche 1 bis 3,
**dadurch gekennzeichnet, daß** die Mittel zur Aufnahme (4; 504) einen Eingang (41; 541) für die Partikel des nicht oder teilweise verdichteten Kieselsäurepulvers (2; 512) und einen Ausgang (42; 542) für die dotierten und verfestigten Kieselsäurepartikel aufweisen, wobei der Eingang (41; 541) von dem Ausgang (42; 542) getrennt ist.

5. Vorrichtung nach Anspruch 4,
**dadurch gekennzeichnet, daß** die Mittel zur Aufnahme (4; 504) so geneigt sind, daß die Partikel durch die Schwerkraft von dem Eingang (41; 541) zu dem Ausgang (42; 542) getrieben werden.

6. Vorrichtung nach einem der Ansprüche 4 oder 5,
**dadurch gekennzeichnet, daß** die Mittel zur Aufnahme (4; 504) gegenüber der Horizontalen geneigt sind.

7. Vorrichtung nach einem der Ansprüche 5 oder 6,
**dadurch gekennzeichnet, daß** die gasförmige Vorstufe so in die Mittel zur Aufnahme (4; 504) eingebracht wird, daß sie bezüglich der Partikel im Gegenstrom zirkuliert.

8. Vorrichtung nach einem der Ansprüche 1 bis 7,
**dadurch gekennzeichnet, daß** das Kieselsäurepulver anfänglich aus Partikeln aus Kieselsäureruß gebildet wird.

9. Vorrichtung nach einem der Ansprüche 1 bis 7,
**dadurch gekennzeichnet, daß** das Kieselsäurepulver anfänglich aus teilweise verdichtetem Kieselsäuregranulat gebildet wird.
